# EUROPÄISCHE PATENTSCHRIFT

(11) **EP 1 692 932 B1**
(45) Veröffentlichungstag und Bekanntmachung des Hinweises auf die Patenterteilung: **16.07.2008**
(21) Anmeldenummer: 06003005.3
(22) Anmeldetag: 15.02.2006
(51) Int. Cl.: A01F 15/14

(54) **Garnknoter für Ballenpressen**
Twine knotter for baler
Machine à nouer les fils pour presse à balles

(30) Priorität: 19.02.2005 DE 202005002688 U
(43) Veröffentlichungstag der Anmeldung: 23.08.2006
(73) Patentinhaber: Rasspe Systemtechnik GmbH & Co. KG, 42651 Solingen (DE)
(72) Erfinder: Schumacher, Friedrich-Wilhelm, 57612 Eichelhardt (DE); Schumacher, Heinz-Günter, 57612 Eichelhardt (DE); Flanhardt, Michael, 40764 Langenfeld (DE); Acimas, Andreas, 42653 Solingen (DE); Platz, Karlfried, 42651 Solingen (DE)
(74) Vertreter: Schumacher, Horst

(56) Entgegenhaltungen:
- EP-A- 0 510 775
- DE-U1- 20 016 238

## Beschreibung

Die Erfindung bezieht sich auf einen Garnknoter der dem Oberbegriff des Anspruchs 1 entsprechenden Art.

Derartige Garnknoter sind zum Beispiel unter dem Namen "System McCormick" seit langem bekannt und in dem Buch "Landmaschinenlehre Band II" von Prof. Dr.-Ing. Heinrich Heyde (Herausgeb.) VEB Verlag Technik Berlin, Berlin 1965 auf den Seiten 128 bis 131 beschrieben.

Solche Garnknoter oder Garnknüpfer werden in Ballenpressen für Stroh, Heu und ähnliches Gut sowie in der Wertstoffverwertung z. B. für die Bündelung von Papier, Textilien, dünnen Blechen und dergleichen eingesetzt, vgl. z. B. DE 297 19 715 U1. Der Garnknoter findet eine weitere Anwendung in Bindemaschinen zum Umbinden von kleinen Bunden aus stängeligem Material mit Gam. Unter stängeligem Material soll in erster Linie landwirtschaftliches oder gartenbauliches Bindegut wie Porree, Zwiebelpfeifen, Pfropfunterlagen, Blumen, einzelne Pflanzen mit ihren Zweigen wie Rosensträucher und dergleichen verstanden werden. Solche Bindemaschinen oder Bindeeinrichtungen können aber auch Bestandteil von Verpackungsanlagen für die Umschnürung von Packen, Ballen oder Bündeln aus hierfür in Betracht kommenden Materialien sein.

In den stationären oder mobilen Ballenpressen für Rechteckballen wird das Pressgut mittels eines vor- und zurückbeweglichen Presskolbens in einen im Querschnitt rechteckigen Presskanal gestopft. Aus dem zusammengepressten im Querschnitt rechteckigen Pressgutstrang werden quaderförmige Packen, eben die "Ballen" abgeteilt, die in zur Kanalrichtung parallelen Ebenen von Schlingen aus Pressengam umgeben werden, welche vor dem Ausstoß des jeweiligen Ballens aus dem Presskanal zu einer geschlossenen Umschnürung verknotet werden, die den Ballen zusammenhält. Im Fall von Einfachknotern wird der Garnstrang von dem an dem Ballen verbleibenden Knoten abgeschnitten und sein freies Ende für die Bildung der nächsten Umschnürung im Knoter festgeklemmt. Bei dem Einsatz von Doppelknotern werden zwei Garnstränge nur in dem Zeitabschnitt zwischen der Bildung des ersten und des zweiten Knotens geklemmt. Die Vorgänge des Verknotens, Abschneidens und Festklemmens übernehmen die Garnknoter, die auf dem Presskanal befestigt sind.

Je nach Breite des quaderförmigen Ballens und der in diesem gewünschten Materialdichte, sind in einer Ballenpresse mehrere Garnknoter nebeneinander auf einer quer zum Presskanal laufenden gemeinsamen Antriebswelle montiert. Die Anzahl der Garnknoter und der diesen die Garnstränge jeweils zuführenden Elemente der Presse, insbesondere der sogenannten Pressennadeln, sind durch die Anzahl der notwendigen Umschnürungen eines Ballens bestimmt. Bei besonders großen und schweren Ballen und bei eine besonders hohe Dichte bzw. einen entsprechenden Pressdruck aufweisenden Ballen, sind mehr Umschnürungen erforderlich.

Die jeweilige Pressennadel führt im Falle von Einfachknotern den Garnstrang hinter dem durch den in Längsrichtung des Presskanals hin und hergehenden Presskolben abgeteilten quaderförmigen Ballen bis in den Zugriffsbereich des zugehörigen Garnknoters. Dort wird der Garnstrang über die Zunge des den Knoten herstellenden Knoterhakens gelegt und weiter zu der Garnklemmeinrichtung transportiert. Von letzterer verläuft bereits das Ende der letzten Garnschlinge über die Knoterzunge zu einer Umlenkkante eines Messerhebels und weiter um den gesamten Ballen. Im Doppelknoter werden sowohl der über der Oberseite als auch der entlang der Unterseite des Ballens verlaufende Gamstrangabschnitt von der Pressennadel über die Zunge des Knoterhakens in die Garnklemmeinrichtung befördert.

Wenn es sich nicht um eine Ballenpresse, sondern um eine der bereits erwähnten Bindemaschinen handelt, wird das Bindegut zur Bildung eines Bundes auf einem Arbeitstisch, der sowohl waagerecht als auch geneigt angeordnet sein kann, abgelegt. Eine sichelförmige Bindenadel, die der Pressennadel entspricht, führt den Garnstrang so um das gebündelte Bindegut, dass das Gamende, das im Garnknoter festgehalten wird, mit dem um den Bund gelegten Garnstrang im Knoter für eine Verknotung zusammentrifft.

Bei einer Ballenpresse mit Einfachknoten verläuft also ein Garnstrang ausgehend von der Garnspule über die Unter-, vordere Stirn- und Oberseite eines Pressballens zu dem betreffenden Knoter, der ein Bauelement aufweist, welches u.a. das rückwärtige Ende des Garnstrangs festhält, nämlich eine Garnklemmeinrichtung. Wird nach dem Fertigpressen des Ballens der Knotvorgang ausgelöst, führt die Pressnadel den Garnstrang zuerst um die vierte Seite des Pressballens und dann in die Garnklemmeinrichtung des Knoters. Nach der Knotenbildung wird dieser Garnstrang kurz hinter dem Knoten von einem an dem Messerhebel angebrachten Messer durchtrennt, so dass die Garnschlinge um den Pressballen durch den Knoten geschlossen ist. Das nun freie Ende des vorher herangeführten Garnstrangs wird im Knoter durch die Garnklemmeinrichtung festgehalten, so dass der Garnstrang in der vorstehend beschriebenen Weise um die Seiten des nächsten Pressballens gelegt werden kann.

Für das Zustandekommen eines vollständigen und haltbaren Knotens ist es Voraussetzung, daß vor der Einleitung des Knotvorgangs die am Knoterhaken schwenkbar angeordnete Knoterzunge, die zusammen mit dem Hakenteil des Knoterhakens das sogenannte Knotermaul bildet, fest auf dem Hakenteil des Knoterhakens anliegt oder, anders ausgedrückt: das Knotermaul muß geschlossen sein. Hierzu drückt ein federbelasteter Schließer auf eine am hinteren Ende der Knoterzunge drehbar gelagerte Zungenrolle. Wenn sich der Knoterhaken zur Bildung der Knotenschlaufen einmal um sich selbst dreht, wird die Rolle der Knoterzunge über eine Nockenfläche geführt, so dass das anfangs geschlossene Knotermaul kurz vor dem Ende der Hakendrehung so weit geöffnet ist, dass die beiden zwischen Garnhalterung und Knoterhaken gespannten Garnstränge sich in das Knotermaul einlegen. Nach einer Umdrehung des Hakens um 360° ist das Hakenmaul wieder geschlossen. Die beiden vorerwähnten Garnstränge werden von dem an dem Messerhebel befestigten Messer durchschnitten, und die von dem Knoterhaken gebildeten Knotenschlaufen von dem Abstreifkamm des Messerhebels über die abgetrennten Garnstrangenden gestreift. Hierdurch entsteht ein Knotengebilde, das seine Endform - einen festen, zugezogenen Knoten - nach Beendigung des Abstreifvorgangs und der Einwirkung einer Zugkraft erhält, die von dem Press- bzw. Bindegut ausgeht, das bestrebt ist, sich wieder auszudehnen.

Der Messerhebel erfüllt während der Knotenbildung folgende Aufgaben:
- Führung und Umlenkung der Garnstänge;
- Schneiden der zwischen dem Knoterhakenmaul und der Garnhalterung gespannten Garnstränge;
- Abstreifen der Knotenschlaufen von dem Knoterhaken über die abgeschnittenen Garnstrangenden.

Der Messerhebel ist hierzu im Knoterrahmen schwenkbar gelagert. Eine an seinem kürzeren Hebelende gelagerte Rolle wird durch eine Kurvenbahn an der Knoterantriebsscheibe angetrieben, so daß der Hebel seine Aufgaben nacheinander erfüllen kann, wenn sich die Knoterantriebsscheibe dreht.

Die Hebelrolle ist auf einem angedrehten Zapfen des Messerhebels zwischen 2 Stützscheiben gelagert und durch einen Sicherungsring gegen axiale Verschiebung gesichert. Die Abrollfläche der Rolle ist ballig ausgeführt, damit die Kurvenbahn der Antriebsscheibe möglichst linienförmig berührt wird, und um die Belastung der Abrollfläche in den verschiedenen Schwenkstellungen um das Schwenklager des Messerhebels zu vergleichmäßigen.

Es ist üblich, den Messerhebel aus GTW oder GGG und die auf dessen Zapfen gelagerte Rolle aus Stahl (gehärtet) zu fertigen. Nach längerem Stillstand einer Maschine kann durch in die Lagerstelle eingedrungene Feuchtigkeit Passungsrost entstehen. Rost und auch Staub, der sich in der Lagerstelle ansammeln kann, können die Rollfähigkeit der Messerhebelrolle beeinträchtigen. Der im Laufe der Betriebszeit entstehende Verschleiß an den Bauteilen kann die Verschmutzung der Lagerstelle begünstigen und somit die Rollfähigkeit der Rolle mindern.

Bisher verwendete Hebelrollen sind in der den Stand der Technik z. B. nach DE 200 16 238 U1 wiedergebenden Figur 6 dargestellt und werden nachfolgend beschrieben:

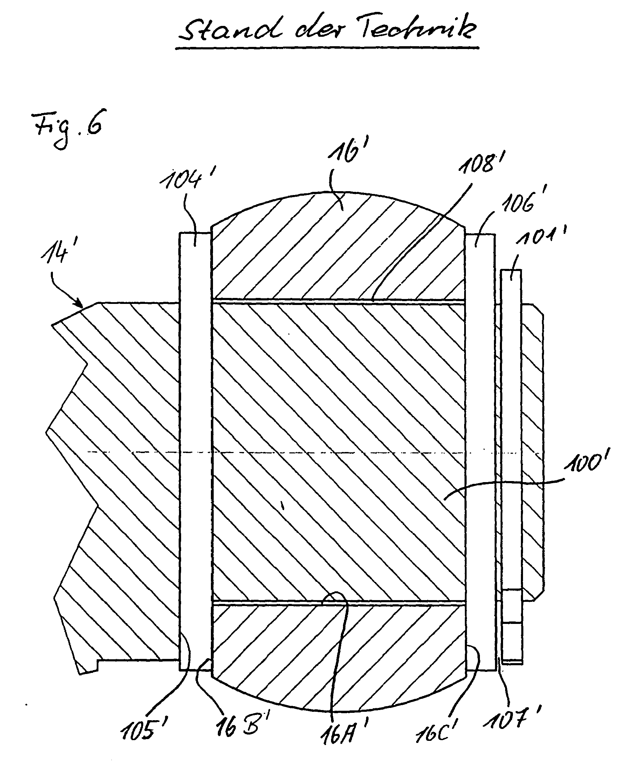

Figur 6 zeigt das äußere Ende eines Messerhebels 14', der dort einen stirnseitig auskragenden Kragzapfen 100' aufweist. Auf diesem Zapfen ist zunächst eine Stützscheibe 104' aufgeschoben, welche sich an einem Bund 105' des Messerhebels 14' abstützt. Ferner ist die mit balliger Außenfläche versehene Rolle 16' mit radialem Spiel (Spalt 108') auf den Kragzapfen 100' aufgeschoben und stützt sich an Ihrem hebelseitigen Stirnende 16B' gegen die nach Außen weisende Stirnfläche der Stützscheibe 104' axial ab. Eine weitere auf den Kragzapfen 100' aufgeschobene Stützscheibe 106' stützt sich an der nach außen weisenden Stirnfläche 16C' der Rolle 16' ab. Schließlich ist ein Sicherungsring 101', im freien Endbereich des Kragzapfens 100' vorgesehen. Da sowohl die Stützscheiben 104' und 106' als auch die Rolle 16' auf dem Kragzapfen 100' axial um die Breites des Spaltes 107' verschiebbar sind, ist das axiale Bewegungspiel der Rolle 16' zwischen den beiden Stützscheiben 104' und 106' undefiniert und kann zwischen dem vollen Spaltbreitenmaß und einem Null-Maß variieren. Letzteres ist in Figur 6 dargestellt. Hierdurch werden z.B. Kapillarkräfte wirksam, die vorhandene Feuchtigkeit in die Spalte an den beiden Stirnflächen 16B' und 16C' der Rolle 16' hineinziehen können. Hierdurch wird unter anderem Bildung von Passungsrost gefördert. Dadurch dass die Stützscheiben 104' und 106' sich bezüglich der Rolle 16' axial entfernen oder nähern können, vergrößert sich außerdem die Gefahr des Eindringens von Staub aus der stark Staub belasteten Umgebungsatmosphäre von Garnknotem für Ballenpressen. Hierdurch wird nicht nur der Verschleiß vorangetrieben, sondern kann auch Staub in den Radialspalt 108' zwischen der Kragzapfenoberfläche und der radialen Innenfläche 16A' der Rolle 16' gelangen. Diese Anfälligkeit bekannter Messerhebel von Garnknotem gegen Verschleiß konnte auch durch Verkleinerung der axialen und radialen Spaltmaße nicht vermindert werden.

Ein Schmiernippel oder dergleichen kann wegen der engen Platzverhältnisse nicht eingebaut werden.

Aus der DE 245 79 83 A1 ist eine Laufrolle für ein Raupenfahrzeug bekannt. Die Laufrolle ist dabei zusammen mit daran befestigten Sicherungsbüchsen um eine feststehende Achse rotierbar.

Aus der AT 262528 B ist eine Rollenführung einer Bogenstranggußanlage für Brammen bekannt, bei der Rollen mit Lagerbüchsen oder Wälzlagern auf Achsen laufen.

Der Erfindung liegt die Aufgabe zugrunde, das Abrollverhalten der Messerhebelrolle so zu verbessern, daß eine störungsfreie Funktion über die gesamte Standzeit eines Messerhebels bzw. Knoters erreicht wird. Zumindest für den Nachrüstungsfall ist es wünschenswert , daß Rollenbreite und -position auf dem Hebelzapfen nicht verändert werden.

Diese Aufgabe wird durch einen Garnknoter mit den Merkmalen des Anspruchs 1 gelöst. Demzufolge wird eine Lagerbuchse auf den Messerhebelzapfen, vorzugsweise mit Festsitz, gegen einen Zapfenbund oder eine an diesem anliegende Stützscheibe geschoben. Auf dieser Buchse sitzt drehbar die Messerhebelrolle, die, vorzugsweise durch einen Bund an der Buchse einenends und, vorzugsweise durch eine an einem Zapfenbund anliegende Stützscheibe, anderenends axial gesichert ist.

Erfindungsgemäß werden also die Paßspalte zur Hebelmesserrolle mittels der Lagerbuchse an allen drei Reibflächen, d.h. der radialen und der beiden axialen Reibflächen der Rolle dauerhaft definiert. Damit wird die Leichtgängigkeit der Rolle auch in feuchter und staubiger Umgebung und auch trotz langer Stillstandszeiten des Garnknoters über erheblich längere Standzeiten erhalten. Es versteht sich, dass dieser Lösungsgedanke in verschiedener Weise realisiert werden kann: So ist es z.B. möglich, dass die auf den Kragzapfen axial, insbesondere durch sogenannten Festsitz, fixierte Lagerbuchse die Rolle unmittelbar gegen einen an dem Messerhebel 14 vorhandenen Bund unter Einhaltung des gewünschten Axialspiels unmittelbar in Anlage hält. In der Praxis wird man in der Regel aber eine an sich bekannte Stützscheibe zwischen der stirnseitigen Bundfläche des Messerhebels und der hebelseitigen Stirnfläche der Rolle einfügen. Die genaue Festlegung des Axialspiels für die Rolle wird in diesem Fall bevorzugt dadurch erreicht, dass die Lagerbuchse mit ihrem hebelseitigen Stirnende die Stützscheibe spielfrei an dem messerhebelseitigen Bund in Anlage hält, so dass sich die Stützscheibe aufgrund des Festsitzens der Lagerbuchse auf dem Kragzapfen axial nicht bewegen und damit das axiale Spiel der Rolle nicht verändern kann. An der gegenüberliegenden Stirnfläche der Rolle kann die Lagerbuchse das axiale Spiel der Rolle auf verschiedene Weise definieren, z.B. mittels eines am Außenumfang der Lagerbuchse axial definiert festgelegten Sicherungsrings. Bevorzugt weist die Lagerbuchse jedoch an diesem Endbereich einen nach radial außen vorspringenden Kragen oder Bund auf, dessen zum Messerhebel hinweisende Stirnfläche als Spalt definierende Stützfläche für das Rollenstirnende dient. Bevorzugte Ausgestaltungen der Rolle, der Lagerbuchse und des Kragzapfens im Bereich des freien Kragzapfenendes werden im Zusammenhang mit dem Ausführungsbeispiel noch näher erläutert werden.

Die Lagerbuchse wird, vorzugsweise gegen axiale Verschiebung zusätzlich gesichert, indem eine zylindrische Einsenkung des Zapfenendes des Messerhebels umgebördelt wird.

Die Buchse besteht bevorzugt aus hochverschleißfestem Material; ihre Oberfläche kann zur Anreicherung von Schmierstoff porös sein. Die Reibzone kann aber auch gleichmäßig verteilte Pfropfen, Taschen oder Kanäle aufweisen, die den Schmierstoff, vorzugsweise Festschmierstoff, aufnehmen.

Ein derart gestaltetes Gleitlager besitzt eine hohe Verschleißfestigkeit und ausgezeichnete selbstschmierende Eigenschaften. Ein angesichts der staubigen Arbeitsumgebung der Knoter wichtiger Vorteil besteht darin, daß eingedrungene Verunreinigungen sich in die Festschmierstoffkörper einbetten, wodurch eine Riefenbildung in der Lagerung und somit ein gebremster Umlauf der Messerhebelrolle vermieden werden.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüche sowie aus der nachfolgenden Beschreibung der zugehörigen Zeichnungen, in der - beispielhaft - ein bevorzugtes Ausführungsbeispiel der erfindungsgemäßen festsitzenden Messerrollen-Lagerbuchse dargestellt ist. In der Zeichnung zeigen:
- Fig. 1: eine Seitenansicht auf einen auf der Knoterwelle einer Presse angeordneten Garnknoter, in Richtung der Knoterwelle gesehen.
- Fig. 2: eine perspektivische Ansicht desselben Garnknoters; die Knoterantriebsscheibe ist nicht dargestellt.
- Fig.3: von demselben Garnknoter den Messerhebel mit Rolle in Seitenansicht;
- Fig. 4: denselben Messerhebel in Seitenansicht - Schnitt entlang der Linie A-A gemäß Fig. 3; sowie
- Fig. 5: von dem Messerhebel nach Fig. 4 eine vergrößerte Detailansicht.

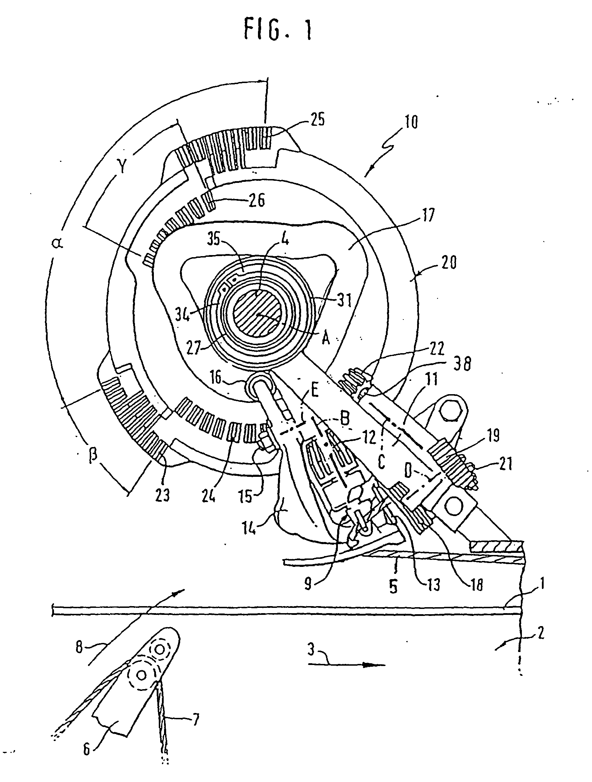

In Fig. 1 ist die obere Wandung 1 eines Pressenkanals 2 wiedergegeben, durch den das kompaktierte Pressgut, z.B. Stroh, im Sinne des Pfeiles 3 gefördert wird. Oberhalb des Pressenkanals 2 ist mit Abstand oberhalb der oberen Wandung 1 eine sich quer über die Breite des Pressenkanals 2 erstreckende Knoterwelle 4 um ihre Achse A drehbar gelagert, auf der, je nach Breite des Pressenkanals 2, zwei bis sechs Garnknoter 10 angeordnet sind. Jedem Garnknoter 10 ist eine in einer vertikalen Längsebene um den Pressballen gelegte Bindegarnschlaufe zugeordnet, die in dem Ausführungsbeispiel der Fig. 1 durch die Bildung zweier Knoten geschlossen wird, die durch den Garnknoter 10 hergestellt werden. Von der in der Förderrichtung 3 voreilenden Stirnseite des Pressballens kommt der über die Oberseite des Pressballens laufende Garnstrang 5 des Bindegarns, der durch nicht dargestellte, auf Fig. 1 links von dem Garnknoter 10 angeordnete Mittel strammgehalten wird und von dem ein Abschnitt bei Einfachknotern auch während der Pressphase im Knoter geklemmt wird. Bei Doppelknotern wird ein Strangabschnitt durch außerhalb des Knoters angeordnete Mittel gespannt. Die Pressennadel 6 führt um die rückwärtige Stirnseite des Pressballens von unten einen weiteren Garnstrang 7 des Bindegams im Sinne des Pfeiles 8 hoch, so daß der Strang 7 im Bereich des Garnknoters 10 mit dem Strang 5 zusammengebracht und verknotet werden kann.

Der Garnknoter 10 umfasst einen Knoterhaken 9, der im Knoterrahmen 11 um eine zur Knoterwelle 4 radial, gemäß Fig. 1 schräg aufwärts, gerichtete Achse B drehbar und über ein Ritzel 12 um diese Achse B antreibbar ist.

Ein Messer 13 ist quer zu den Strängen 5 und 7 des Bindegarns beweglich angeordnet, um das Garn nach der Knotenbildung abzuschneiden. Das Messer 13 ist an einem Messerhebel 14 angebracht, dessen Wellenzapfen 15 um die Achse E in einem Lager im Knoterrahmen 11 schwenkbar ist und dabei durch eine Rolle 16 bewegt wird, die sich in einer Nut 17 der als Ganzes mit 20 bezeichneten Knoterscheibe verlagert; dargestellt ist die Scheibe eines Doppelknoters.

18 ist der Garnhalter, der die Stränge 5 und 7 während bestimmter Arbeitsabläufe des Knoterhakens 9 und des Messers 13 in Position hält und der um eine unter etwa 45° nach vorn in einer vertikalen Ebene geneigte Achse D drehbar ist. Der Garnhalter 18 umfasst den eigentlichen Halter 18A und den Mitnehmer 18B, welcher mit seinem Schaft in einem Lager im Knoterrahmen 11 geführt ist. Der Antrieb erfolgt dabei über ein Ritzel 19, welches mit einer Schnecke 21 in Eingriff steht, die von einem Ritzel 22 antreibbar ist. Die Schnecke 21 sitzt an einem Ende einer Ritzelwelle 38 mit der Achse C, an deren anderem Ende das Ritzel 22 befestigt ist.

Die Ritzel 12 und 22 werden bei Knotern, die bei einer Umdrehung der Knoterantriebsscheibe nur einen Knoten erzeugen, von jeweils einem Zahnsegment auf der Knoterscheibe angetrieben. Das Bindeverfahren ist im Einzelnen in der EP 0 237 771 beschrieben.

Bei Knotern jedoch, die im Ausführungsbeispiel bei einer Umdrehung der Knoterscheibe zwei Knoten erzeugen, werden die Ritzel 12 und 22 durch Paare von Zahnsegmenten 23, 24 bzw. 25, 26 angetrieben, die auf der in Fig. 1 dem Betrachter zugewandten Flachseite der Knoterscheibe 20 im Bereich deren äußeren Randes angeordnet sind. Die Zahnsegmente 24, 26 sind untereinander gleich und liegen radial etwas weiter innen, so dass sie bei der Drehung der Knoterscheibe 20 nur mit dem Ritzel 22 in Eingriff kommen können. Die Zahnsegmente 23, 25 sind ebenfalls untereinander gleich und liegen radial ganz außen und treiben das Ritzel 12 an.

Die Zahnsegmente 25, 26 folgen im Übrigen den Zahnsegmenten 23, 24 bei einer Drehung der Knoterscheibe 20 entgegen dem Uhrzeigersinn um einen Winkel α von etwa 115° in Umfangsrichtung nach. Die Zahnsegmente 23, 25 erstrecken sich über einen Winkel β von etwa 30°, die Zahnsegmente 24, 26 um einen Winkel γ von etwa 40°.

Der in Fig. 1 dargestellte Knoter 10 vollführt bei einer Umdrehung der Knoterscheibe 20 - angetrieben durch die Zahnsegmente 23, 24 bzw. 25, 26 - rasch hintereinander zwei Verknotungen, nämlich die erste, die den hinter der rückwärtigen Stirnseite eines Pressballens hochkommenden Strang 7 mit dem oberen Strang 5 verbindet und dadurch eine geschlossene Bindegarnschlaufe bildet, und eine zweite, die den an der vorderen Stirnseite des nachfolgenden Pressballens hochkommenden Strang mit dem auf der Oberseite des nachfolgenden Pressballens laufenden Strang verbindet und dadurch die Bildung einer neuen Bindegarnschlaufe für den neu zu bildenden Pressballen einleitet. Zwischen den Knoten wird das Bindegarn abgetrennt, so daß die aufeinanderfolgenden Pressballen voneinander getrennt werden.

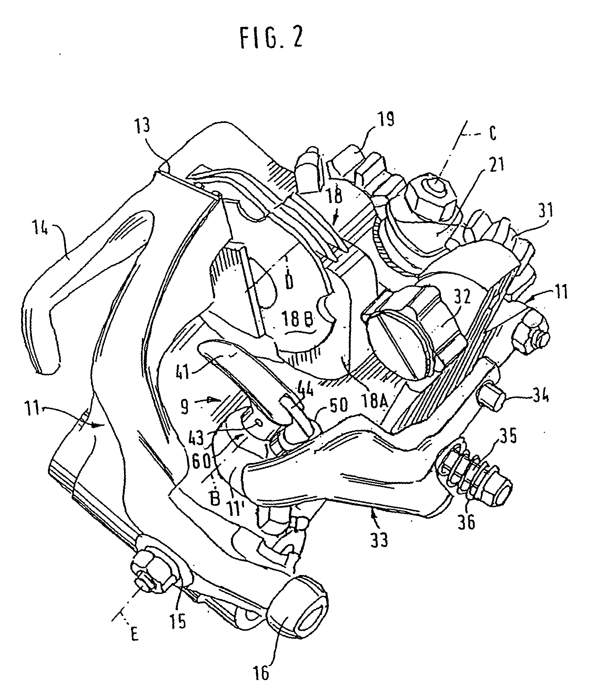

Aus der Darstellung der Fig. 2 ist ersichtlich, daß mit der Schnecke 21 noch ein zweites Ritzel 31 zusammenwirkt, auf dessen Welle am anderen Ende ein Federnocken 32 angeordnet ist, der periodisch und nachgiebig einen Druck auf den Halter 18A ausübt, so dass dieser fester in den Mitnehmer 18B hineingedrückt wird und das Garn besonders fest hält.

Auf der gemäß Fig. 2 vorderen Seite des Knoterrahmens 11 ist der sogenannte Schließer 33 angeordnet, der als längliches Teil ausgebildet und an einem Ende auf einem im Knoterrahmen 11 sitzenden Zapfen 34 lose gehalten ist. Etwa in der Mitte ist der Schließer von einer Schraube 35 durchgriffen, die den Schließer 33 über eine Schraubendruckfeder 36 von außen gegen den Knoterrahmen 11 hin drückt. Das freie Ende des Schließers 33 besitzt auf der in Fig. 2 dem Betrachter abgewandten Seite eine Laufbahn, an der die Zungenrolle 50 bei der Drehung des Knoterhakens 9 um die Achse B zur Anlage kommt. Die Kraft der Feder 36 bewirkt, daß die Knoterzunge 44 in der Phase der Anlage der Zungenrolle 50 federnd fest gegen den Hakenteil 41 des Knoterhakens 9 gedrückt und das Knotermaul besonders fest geschlossen gehalten werden.

Die Knoterzunge 44 bildet einen um eine Schwenkachse 43 schwenkbar gelagerten zweiarmigen Hebel dessen einer Arm (Zungenteil) mit dem Hakenteil 41 des Knoterhakens 9 unter Bildung des Knotermauls zusammenwirkt und an dessen anderem Arm die Zungenrolle 50 um deren Achse drehbar gelagert ist.

Das Öffnen des Knotermauls wird dadurch bewerkstelligt, dass bei der Drehung des Knoterhakens 9 die Zungenrolle über eine in Figur 2 nur schematisch angedeutete Nockenfläche 60 läuft, wodurch die Zungenrolle 50 gemäß Figur 2 angehoben und das Zungenteil von dem Hakenteil 41 weggeschwenkt wird.

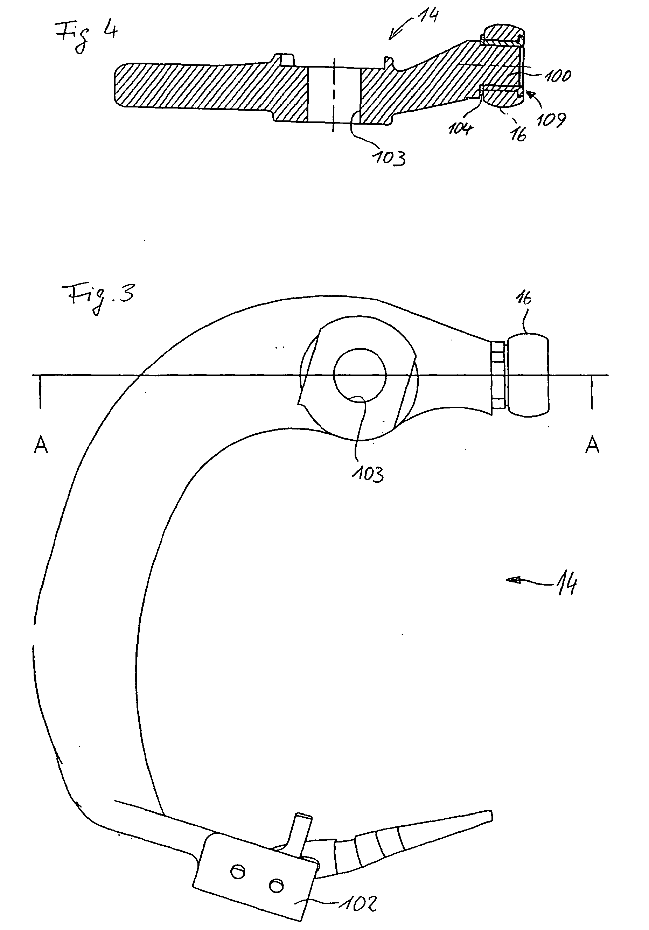

Figur 3 und Figur 4 zeigen die den Messerhebel 14 umfassende Baugruppe nur teilweise. Der Hebel 14 weist einen Zapfen 100 auf, auf dem die Rolle 16 gelagert ist. 102 ist die Auflageplatte für das Garnmesser 13 und 103 die Bohrung zur Aufnahme des Wellenzapfens 15, der um die Achse E in einem Lager des Knoterrahmens 11 schwenkbar ist.

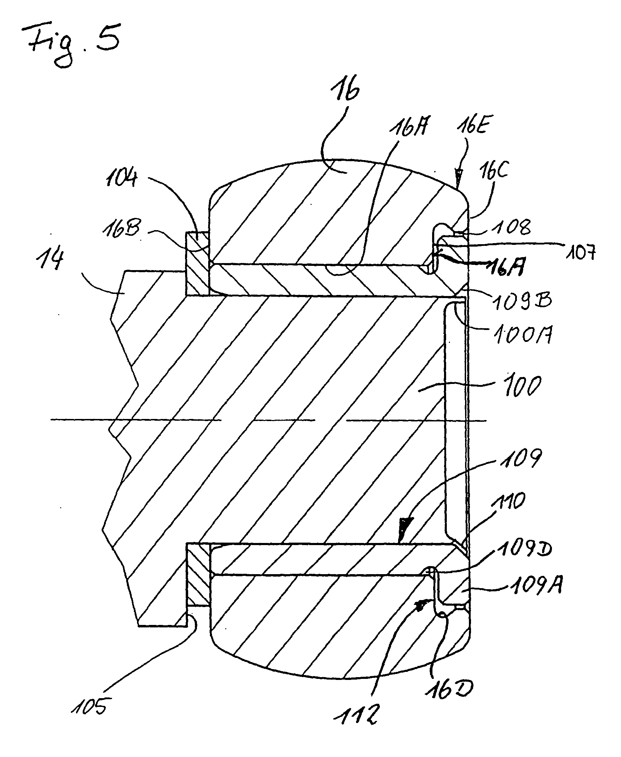

Wie aus Figuren 3 bis 5 und insbesondere Figur 5 ersichtlich, weist das (in der Zeichnung rechte) Ende des Messerhebels 14 eine Bundfläche 105 und einen davon vorkragenden Kragzapfen 100 auf über den eine Lagerbuchse 109 geschoben ist. Auf deren radialen Außenfläche läuft die radial innenliegende Gleitfläche 16F der Rolle 16. Für Materialauswahl und Oberflächenausgestaltung der Lagerbuchse und der Rolle, zumindest im Bereich Ihrer Gleitfläche 16F, stehen eine Vielzahl von am Markt erhältlichen Produkte zur Verfügung, insbesondere solche aus Stahl mit besonders behandelten Reibungsflächen, wie sich kreuzenden Oberflächenrillungen (Quadrillierung), thermochemischer Imprägnierung, Schmierstoffreservoiren, wie Pfropfen-Aufnahmen, Taschen oder Kanälen, und dergleichen. In dem dargestellten und insoweit bevorzugten Ausführungsbeispiel, ist die Lagerbuchse 109 an dem der Stützscheibe 104 gegenüberliegenden Stirnende mit einem umlaufenden Kragen 109A ausgestattet, der in axialer Richtung auf der Seite der Stützrolle einen genau dimensionierten Spalt 107 für das maximale axiale Spiel der Rolle 16 definiert. Die außen in bekannter Weise ballig geformte Rolle 16 stützt sich axial also zwischen der immobilisierten Stützscheibe 104 und dem ebenfalls immobilen Kragen 109A zwischen den jeweils einander zugewandten Stirnflächen ab. Sie kann je nach Materialpaarung Rolle/Lagerbuchse mit außerordentlich geringem radialen Spiel geformt sein. Aufgrund des Vorhandenseins des Kragens 109A muss die Lagerbuchse 109 gemeinsam mit der Rolle 16 auf den Kragzapfen 100 aufgeschoben werden bis die Stützscheibe 104 stramm an der Bundfläche 105 angedrückt wird. Der Festsitz der Lagerbuchse in dieser Position wird vorteilhafter Weise dadurch axial gesichert, dass die Stirnfläche des Kragzapfens 100 von einem sich axial erstreckenden Ring 100A überragt wird, welcher nach radial Außen so verformt werden kann, dass er sich gegen eine Fase 109B am inneren Umfang des Kragens 109A abstützt. Dadurch wird unter anderem erreicht, dass Kragzapfen und Lagerbuchse praktisch in einer Ebene enden.

Die Rolle 16 ist in dem dargestellten und insoweit bevorzugten Ausführungsbeispiel nach Figur 5 mit einer falzartigen Aussparung 16A versehen, deren Querschnitt im wesentlichen dem des auskragenden Teils des Kragens 109A entspricht. Damit kann die außenliegende Stirnfläche 16C der Rolle 16 praktisch in der gleichen Ebene liegen wie das Stirnende des Kragens 109A der Lagerbuchse 109. Das Ansammeln von Staub in dieser exponierten Zone wird damit erheblich erschwert. Außerdem kann die Reibfläche zwischen der Lagerbuchse 109 und der Rolle 16 bei gleicher axialer Wirklänge der Rolle 16 verringert werden.

Auf diese Weise wird gleichzeitig eine Labyrinthdichtung zwischen der Rolle und der Lagerbuchse am freien Lagerbuchsenende geschaffen, welche das Eindringen von kleinen Fremdkörpern in den Lagerspalt, d.h. die radiale Lauffläche zwischen Rolle und Lagerbuchse erheblich erschwert.

Ferner kann sowohl die Lagerbuchse als auch die Rolle mit einer Hinterschnittnut 109D bzw. 16D im Bereich der Axialsicherung zwischen Lagerbuchse und Rolle vorgesehen sein. Diese können als Speicherräume für kleinere Mengen an Fremdkörpern dienen, so dass das Weiterwandern solcher Fremdkörper in Richtung auf den Lagerspalt gehemmt wird.

Durch das ringförmige axiale Hinausragen 16E der Rolle 16 über die axiale Sicherungsebene zur Lagerbuchse hinaus kann auch ein definierter sehr enger radialer Spalt 108 definiert werden, der nicht als radiale Lagerfläche der Rolle 16 dient, sondern das Wiederaustreten etwa zwischen Rolle und Lagerbuchse eingedrungener Feuchtigkeit gestattet.

Eine erfindungsgemäße gestaltete, gelagerte und axial gesicherte Rolle des Messerhebels kann also den dauerhaft sicheren Betrieb eines Garnknoters für Ballenpressen in deutlich verbesserter Weise (als nach dem Stand der Technik bekannt) sicherstellen. Dies ohne Wartung und auch ohne großen technischen Aufwand und auch ohne Größe, Form und Position der Rolle innerhalb des von sehr engen Platzverhältnissen geprägten Garnknoters. Zudem kann durch die Erfindung - wie in dem dargestellten und insoweit bevorzugten Ausführungsbeispiel geschehen - mit kürzerer axialer Länge des Kragzapfens auskommen, was den beschriebenen engen Platzverhältnissen am Garnknoter zugute kommt.

Es versteht sich, dass erfindungsgemäß gestaltete Messerhebel auch in anderen Vorrichtungen als Garnknotern vorteilhaft Anwendung finden können.

### Bezugszeichenliste:

- 1: Wandung
- 4: Knoterwelle
- 5: Garnstrang
- 6: Pressnadel
- 7: Garnstrang
- 9: Knoterhaken
- 10: Garnknoter
- 11: Knoterrahmen
- 12: Ritzel
- 13: Garnmesser
- 14: Messerhebel
- 14': Messerhebel
- 15: Wellenzapfen
- 16: Rolle
- 16': Rolle
- 16A: Aussparung
- 16A': Innenfläche
- 16B: Stirnfläche
- 16B': Stirnfläche
- 16C': Stirnfläche
- 16D: Hinterschnittnut
- 16E: Hinausragen
- 16F: innere Rollengleitfläche
- 17: Nut
- 18: Garnhalter
- 18A: Halter
- 18B: Mitnehmer
- 19: Ritzel
- 20: Knoterscheibe
- 22: Ritzel
- 23: Zahnsegmente
- 24: Zahnsegmente
- 25: Zahnsegmente
- 26: Zahnsegmente
- 31: Ritzel
- 32: Federnocken
- 33: Schließer
- 34: Zapfen
- 35: Schraube
- 36: Schraubendruckfeder
- 38: Ritzelwelle
- 41: Hakenteil
- 44: Knoterzunge
- 50: Zungenrolle
- 60: Nockenfläche
- 100': Kragzapfen
- 100A: Ring
- 101': Sicherungsring
- 102: Auflageplatte
- 103: Bohrung
- 104: Stützscheiben
- 104': Stützscheibe
- 105: Bund
- 105': Bund
- 106': Stützscheiben
- 107: Spalt
- 107': Spalt
- 108': Radialspalt
- 109: Lagerbuchse
- 109A: Kragen
- 109B: Fase
- 109D: Hinterschnittnut
- 112: Labyrinthdichtung

## Patentansprüche

1. Gamknoter (10) für Ballenpressen, mit einem Knoterrahmen (11), der zumindest einen Knoterhaken (9) und eine Knoterantriebsscheibe (20) drehbar sowie einen Messerhebel (14) schwenkbar aufnimmt, wobei der Messerhebel einenends einen Kragzapfen (100) mit einer auf Ihm drehbar gelagerten beidendig axial gesicherten Rolle (16) aufweist, welche (Rolle) in einer Steuernut (17) oder an einer anderen Kurvenbahn der Knoterantriebsscheibe abrollt und dadurch den Messerhebel bei fortschreitendem Drehen der Knoterantriebsscheibe in dessen verschiedenen Schwenklagen verschwenkt,
**dadurch gekennzeichnet,**
**dass** eine Lagerbuchse (109), welche auf dem Kragzapfen (100) axial gesichert ist, die auf ihrem Außenumfang drehgelagerter Rolle (16) im Bereich von deren Stirnenden (16B und 16C) mit vorgegebenem Axialspiel (107) bezüglich des Kragzapfens (100) sichert.

2. Garnknoter nach Anspruch 1, **dadurch gekennzeichnet, dass** die Lagerbuchse (109) auf dem Kragzapfen (100) mit Festsitz gehalten wird.

3. Gamknoter nach Anspruch 1 oder 2, **dadurch gekennzeichnet, dass** eine etwa vorhandene Stützscheibe (104) für das hebelseitige Rollenende durch die Lagerbuchse in axialer Richtung fixiert wird.

4. Garnknoter nach einem der Ansprüche 1 bis 3, **dadurch gekennzeichnet, dass** die Lagerbuchse (109) gegen axiale Verschiebung mittels eines Bördelrandes (Ringbereich 100A) am freien Stirnende, insbesondere zusätzlich, gesichert wird.

5. Gamknoter nach einem der Ansprüche 1 bis 4, **dadurch gekennzeichnet, dass** der Kragzapfen (100) mit der Rolle (16) am freien Zapfenende im wesentlichen bündig abschließt.

6. Gamknoter nach einem der Ansprüche 1 bis 5, **gekennzeichnet durch** einen die Lagerbuchse (109) an ihrem freien Ende umlaufenden Kragen (109A).

7. Gamknoter nach einem der Ansprüche 1 bis 6, **gekennzeichnet durch** eine falzartige Aussparung (16D) der Rolle (16) am inneren Umfang von deren nach Außen weisenden (freien) Ende, insbesondere zur Aufnahme eines Kragens (109A) am freien Lagerbuchsenende.

8. Garnknoter nach einem der Ansprüche 1 bis 7, **gekennzeichnet durch** eine Labyrinthdichtung (112) am freien Stirnende zwischen Lagerbuchse und Rolle.

9. Garnknoter nach einem der Ansprüche 1 bis 8, **gekennzeichnet durch** mindestens eine Hinterschnittnut (16D) im Bereich des freien Stirnendes der Rolle (16) und/oder (109D) im Bereich des freien Endes der Lagerbuchse (109), insbesondere als Rückhalteraum für unerwünschte Fremdpartikel.

10. Gamknoter nach einem der Ansprüche 1 bis 9, **gekennzeichnet durch** einen radialen, permanenten Distanzspalt (108) zwischen den freien Endbereichen der Rolle (16) und der Lagerbuchse (109).

11. Garnknoter nach einem der Ansprüche 1 bis 10, **dadurch gekennzeichnet, dass** die Lagerbuchse (109) und/oder die Rolle (16) aus hochverschleißfestem Material besteht und/oder zumindest eine ihre Oberflächen zur Anreicherung von Schmierstoff porös ist und/oder ihre Reibzone verteilte Pfropfen, Taschen, oder Kanäle zur Aufnahme von Schmierstoff, vorzugsweise Festschmierstoff aufweist.

## Claims

1. Twine knotter (10) for baling presses, comprising a knotting frame (11), which rotatably receives at least one knotting hook (9) and a knotting drive disc (20) and pivotably receives a blade lever (14), the blade lever at one end having a cantilever pin (100) with a roller (16) axially secured at both ends and rotatably mounted thereon, which (roller) rolls in a control groove (17) or on another curved path of the knotting drive disc and thereby pivots the blade lever on continuing rotation of the knotting drive disc into the various pivot positions thereof, **characterised in that** a bearing bush (109), which is axially secured on the cantilever pin (100), secures the roller (16) which is rotatably mounted on its outer periphery, in the region of the front ends (16B and 16C) thereof with predetermined axial play (107) with respect to the cantilever pin (100).

2. Twine knotter according to claim 1, **characterised in that** the bearing bush (109) is held with an interference fit on the cantilever pin (100).

3. Twine knotter according to claim 1 or 2, **characterised in that** a possibly present support disc (104) for the lever-side roller end is fixed in the axial direction by the bearing bush.

4. Twine knotter according to any one of claims 1 to 3, **characterised in that** the bearing bush (109) is secured, in particular additionally, against axial displacement by means of a flanged rim (annular region 100A) at the free front end.

5. Twine knotter according to any one of claims 1 to 4, **characterised in that** the cantilever pin (100) ends substantially flush with the roller (16) at the free pin end.

6. Twine knotter according to any one of claims 1 to 5, **characterised by** a collar (109A) extending around the bearing bush (109) at its free end.

7. Twine knotter according to any one of claims 1 to 6, **characterised by** a fold-like recess (16D) of the roller (16) at the inner periphery of the (free) end thereof pointing outwardly, in particular to receive a collar (109A) at the free bearing bush end.

8. Twine knotter according to any one of claims 1 to 7, **characterised by** a labyrinth seal (112) at the free front end between the bearing bush and roller.

9. Twine knotter according to any one of claims 1 to 8, **characterised by** at least one undercut groove (16D) in the region of the free front end of the roller (16) and/or (109D) in the region of the free end of bearing bush (109), in particular as a retaining space for undesired foreign particles.

10. Twine knotter according to any one of claims 1 to 9, **characterised by** a radial, permanent spacer gap (108) between the free end regions of the roller (16) and the bearing bush (109).

11. Twine knotter according to any one of claims 1 to 10, **characterised in that** the bearing bush (109) and/or the roller (16) consists of highly wear-resistant material and/or at least one of its surfaces is porous to accumulate lubricant and/or its friction zone has distributed plugs, pockets or channels to receive lubricant, preferably solid lubricant.

## Revendications

1. Noueur (10) pour des presses à balles comportant un cadre de noueur (11) recevant au moins un crochet de noueur (9) et un disque d'entraînement en rotation (20), en rotation ainsi qu'un levier à couteau (14), pivotant,
le levier à couteau ayant à une extrémité un tourillon en saillie (100), portant un galet (16) monté à rotation et fixé axialement des deux côtés, le galet roulant dans une rainure de commande (17) ou un autre chemin de came du disque d'entraînement de noueur et pivotant ainsi le levier porte-couteau en fonction de la progression de la rotation du disque d'entrainement de noueur, dans ses différentes positions de pivotement,
**caractérisé en ce qu'**
un coussinet de palier (109) bloqué axialement sur le tourillon (100) maintient le galet (16) monté à rotation sur sa périphérie extérieure, dans la région de ses extrémités frontales (16B et 16C) avec un jeu axial prédéfini (107) par rapport au tourillon (100).

2. Noueur selon la revendication 1,
**caractérisé en ce que**
le coussinet de palier (109) est tenu par un siège pressé sur le tourillon (100).

3. Noueur selon la revendication 1 ou 2,
**caractérisé par**
une éventuelle rondelle d'appui (104) pour l'extrémité du galet côté levier, bloquée par le coussinet de palier dans la direction axiale.

4. Noueur selon l'une des revendications 1 à 3,
**caractérisé en ce que**
le coussinet de palier (109) est fixé en coulissement axial notamment de façon complémentaire par un bord de sertissage (zone annulaire 100A) à l'extrémité frontale libre.

5. Noueur selon l'une des revendications 1 à 4,
**caractérisé en ce que**
le tourillon (100) se termine pratiquement au niveau du galet (16) par son extrémité libre.

6. Noueur selon l'une des revendications 1 à 5,
**caractérisé par**
une collerette (109A) entourant l'extrémité libre du coussinet de palier (109).

7. Noueur selon l'une des revendications 1 à 6,
**caractérisé par**
un dégagement en forme de feuillure (16D) du galet (16) dans sa périphérie intérieure à son extrémité (libre) tournée vers l'extérieur, notamment pour recevoir la collerette (109A) de l'extrémité libre du coussinet de palier.

8. Noueur selon l'une des revendications 1 à 7,
**caractérisé par**
un joint en labyrinthe (112) à l'extrémité frontale libre entre le coussinet de palier et le galet.

9. Noueur selon l'une des revendications 1 à 8,
**caractérisé par**
au moins une contre-dépouille (16D) dans la région de l'extrémité frontale libre du galet (76) et/ou (109D) au niveau de l'extrémité libre du coussinet de palier (109), notamment comme espace de retenue de particules étrangères, non souhaitées.

10. Noueur selon l'une des revendications 1 à 9,
**caractérisé par**
un intervalle d'écartement (108) permanent, radial, entre les zones d'extrémité libres du galet (16) et du coussinet de palier (109).

11. Noueur selon l'une des revendications 1 à 10,
**caractérisé en ce que**
le coussinet de palier (109) et/ou le galet (16) sont réalisés en une matière très résistante à l'usure et/ou au moins l'une de leurs surfaces est poreuse pour être enrichie en lubrifiant et/ou sa zone de friction comporte une répartition de bossages et de cuvettes ou de canaux pour recevoir des agents lubrifiants, de préférence des lubrifiants solides.
